# FASCICULE DE BREVET EUROPEEN

(11) **EP 3 325 328 B1**
(45) Date de publication et mention de la délivrance du brevet: **07.07.2021**
(21) Numéro de dépôt: 16730452.6
(22) Date de dépôt: 20.05.2016
(51) Int. Cl.: B62D 15/02

(54) **PROCÉDÉ DE CONTRÔLE INTERACTIF DU STATIONNEMENT AUTOMATIQUE D'UN VÉHICULE AUTOMOBILE AU MOYEN D'UN TERMINAL MOBILE**
VERFAHREN ZUR INTERAKTIVEN STEUERUNG DES AUTOMATISCHEN EINPARKENS EINES KRAFTFAHRZEUGS DURCH EIN MOBILES ENDGERÄT
METHOD FOR INTERACTIVE CONTROL OF THE AUTOMATIC PARKING OF A MOTOR VEHICLE BY MEANS OF A MOBILE TERMINAL

(30) Priorité: 20.05.2015 FR 1554536
(43) Date de publication de la demande: 30.05.2018
(73) Titulaire: Valeo Comfort and Driving Assistance, 94046 Créteil Cedex (FR)
(72) Inventeur: GEHIN, Frédéric, 94046 Creteil Cedex (FR)
(74) Mandataire: Delplanque, Arnaud
(86) Numéro de dépôt international: PCT/FR2016/051205
(87) Numéro de publication internationale: WO 2016/185151

(56) Documents cités:
- EP-A1- 2 295 281
- EP-A2- 2 617 627
- DE-A1-102011 003 231
- DE-A1-102011 079 703
- DE-A1-102012 007 984
- US-A1- 2007 198 190
- US-A1- 2015 127 208

## Description

### DOMAINE TECHNIQUE AUQUEL SE RAPPORTE L'INVENTION

La présente invention concerne de manière générale l'aide au stationnement d'un véhicule automobile.

Elle concerne plus particulièrement un procédé de contrôle interactif du stationnement automatique d'un véhicule automobile dans une place de stationnement, au moyen d'un terminal mobile.

Elle s'applique à un véhicule automobile équipé :
- de moyens de commande de l'orientation des roues du véhicule automobile,
- de moyens de contrôle d'un groupe motopropulseur du véhicule automobile,
- d'au moins un moyen d'aide à la détection d'obstacles,
- de moyens d'interaction placés dans un habitacle du véhicule automobile, et
- d'un calculateur qui est adapté à piloter lesdits moyens de commande et de contrôle, et qui est adapté à transmettre, en fonction de données reçues de chaque moyen d'aide à la détection d'obstacles, une information auxdits moyens d'interaction afin de signaler la présence éventuelle d'un obstacle à un utilisateur installé dans le véhicule automobile.

### ARRIERE-PLAN TECHNOLOGIQUE

Le stationnement d'un véhicule automobile est souvent source de problème et d'anxiété pour le conducteur.

C'est la raison pour laquelle on été développés des systèmes d'aide au stationnement, permettant par exemple d'émettre un signal sonore lorsque l'arrière du véhicule se rapproche d'un obstacle ou d'afficher sur un écran présent dans l'habitacle les images filmées en temps réel par une caméra située à l'arrière du véhicule.

Pour faciliter encore le stationnement du véhicule, il a été récemment développé des systèmes permettant au véhicule de se garer seul, c'est-à-dire automatiquement, sans l'intervention du conducteur mais toujours sous sa surveillance et donc responsabilité. Ces systèmes autonomes mais non responsables fonctionnement notamment grâce à des moyens d'aide à la détection d'obstacles, qui informent le véhicule de la position de la place de stationnement et de la présence éventuelle d'obstacles.

Dans le cas où la place de stationnement est si petite qu'une fois le véhicule garé, le conducteur ne pourra plus ouvrir les portières, il est prévu que le conducteur puisse se trouver hors de l'habitacle pendant que le véhicule se stationne.

Ces systèmes de stationnement automatique n'étant pas infaillibles, et parce que le conducteur reste responsable légalement de la manœuvre, une solution a été développée pour permettre à l'usager d'interrompre la manœuvre depuis son terminal mobile s'il perçoit un danger.

Cette solution consiste à demander à l'usager d'exercer sur son terminal mobile une pression pour autoriser le véhicule à se garer, si bien qu'il peut interrompre cette opération de stationnement en relâchant simplement la pression qu'il exerce sur l'écran tactile de son smartphone.

Cette solution demeure imparfaite car on a constaté qu'elle ne permet pas au conducteur d'interagir aussi bien avec l'environnement du véhicule que s'il était installé dans son véhicule.

La publication de demande de brevet américaine US2007/0198190A1 divulgue un véhicule utilitaire mettant en œuvre un système d'aide à la manœuvre avec un dispositif d'affichage, un dispositif d'entrée et un système de contrôle. Le dispositif d'affichage affiche une orientation réelle et une position réelle du véhicule ainsi que les environs proches du véhicule. Le document US 2015/127208 A1 est en outre considéré comme l'art antérieur le plus proche, selon le préambule de la revendication 1.

### OBJET DE L'INVENTION

Afin de remédier à l'inconvénient précité de l'état de la technique, la présente invention propose de sécuriser davantage l'opération de stationnement du véhicule lorsque le conducteur est à l'extérieur du véhicule, en reproduisant autant que possible la situation dans laquelle le conducteur se trouve lorsqu'il est à l'intérieur du véhicule.

Plus particulièrement, on propose selon l'invention un procédé tel que défini dans l'introduction, dans lequel il est prévu des étapes de sélection par l'utilisateur d'un mode de stationnement automatique du véhicule automobile, puis de stationnement automatique du véhicule automobile au cours de laquelle :
- le calculateur pilote lesdits moyens de commande et de contrôle en fonction de chaque information reçue de chaque moyen d'aide à la détection d'obstacles,
- chaque information est transmise par le calculateur au terminal mobile afin de signaler la présence éventuelle d'un obstacle à un utilisateur (le conducteur) situé à l'extérieur du véhicule automobile.

En outre, préalablement à ladite étape de stationnement automatique, il est prévu une étape de mise en réseau du terminal mobile avec le calculateur du véhicule automobile au cours de laquelle le terminal mobile et le calculateur échangent au moins une donnée de mise en réseau ;
- ladite donnée de mise en réseau est comprise dans la liste suivante :
   - une information fournissant la version d'une application stockée dans le calculateur du véhicule automobile,
   - une information fournissant la version d'une application stockée dans le terminal mobile, ou
   - un statut de priorité de l'application stockée dans le terminal mobile.

Ainsi, grâce à l'invention, les informations auxquelles pourrait accéder le conducteur s'il se trouvait dans l'habitacle du véhicule sont transmises au terminal mobile, de manière que le conducteur situé à l'extérieur du véhicule puisse accéder à l'ensemble de ces informations. De cette manière, le conducteur peut appréhender avec plus d'efficience l'environnement du véhicule et, de ce fait, détecter plus rapidement tout danger.

Le conducteur peut en outre bénéficier de toutes les options disponibles, à savoir par exemple interrompre la manœuvre, changer de manœuvre, poursuivre la manœuvre, ...

Il peut également mieux comprendre, lorsque le véhicule détecte un obstacle, pourquoi le véhicule s'arrête. En effet, il peut, à titre d'exemple, observer sur son terminal mobile les images acquises par les caméras du véhicule et comprendre quel obstacle est considéré gênant par le calculateur du véhicule automobile.

D'autres caractéristiques avantageuses et non limitatives du procédé conforme à l'invention sont les suivantes :
- lors de l'étape de mise en réseau du terminal mobile (30) avec le calculateur (21) du véhicule automobile (10), le terminal mobile (30) et le calculateur (21) échangent au moins une donnée de mise en réseau comprise dans la liste suivante :
   - une langue de communication pour l'utilisateur (80) ;
   - une information (VID) caractérisant le véhicule automobile (10) ;
   - une information (IMEI) caractérisant le terminal mobile (30).
- ledit terminal mobile comportant un écran d'affichage, ledit véhicule automobile comportant plusieurs moyens d'aide à la détection d'obstacles adaptés chacun à transmettre des données différentes au calculateur, au cours de l'étape de stationnement automatique, le calculateur élabore plusieurs informations en fonction desdites données, et l'utilisateur sélectionne à l'aide du terminal mobile, parmi lesdites informations élaborées, au moins une information à afficher sur ledit écran d'affichage ;
- ladite information est comprise dans la liste suivante :
   - une image acquise par une caméra équipant le véhicule automobile,
   - une image reconstituée, élaborée en fonction de plusieurs images acquises par plusieurs caméras équipant le véhicule automobile, un motif illustrant la trajectoire du véhicule automobile, à superposer à ladite image acquise ou à ladite image reconstituée, un motif signalant un obstacle, à superposer à ladite image acquise ou à ladite image reconstituée,
   - une alerte sonore signalant un obstacle, par exemple un bip alternatif de fréquence proportionnelle à la distance séparant l'obstacle du véhicule,
   - une alerte visuelle signalant un obstacle,
   - une vibration signalant un obstacle,
   - une distance avant percussion d'un obstacle, ou
   - un indicateur relatif à un ensemble de manœuvres que le véhicule automobile est en mesure d'exécuter ;
- ledit terminal mobile comportant un écran d'affichage, ledit véhicule automobile comportant au moins deux caméras, au cours de ladite étape de stationnement automatique, le terminal mobile met à disposition de l'utilisateur un moyen lui permettant de choisir l'affichage sur l'écran d'affichage des images acquises soit par l'une, soit par l'autre des caméras ;
   - le terminal mobile comportant des moyens d'acquisition d'au moins une instruction de contrôle du véhicule automobile émise par l'utilisateur et des moyens de transmission de cette instruction de contrôle au calculateur du véhicule automobile, au cours de ladite étape de stationnement automatique, le calculateur pilote lesdits moyens de commande et de contrôle en fonction de chaque instruction de contrôle reçue du terminal mobile ;
   - ladite instruction de contrôle est comprise dans la liste suivante :
      - une instruction d'allumage ou d'extinction de moyens d'éclairage du véhicule automobile,
      - un type de manœuvre à exécuter,
      - un rapport de vitesses à engager,
      - une instruction d'interrompre la manœuvre de stationnement,
      - une instruction de poursuivre la manœuvre de stationnement, ou
      - une donnée relative à la capacité de l'utilisateur à poursuivre la manœuvre de stationnement ;

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un véhicule automobile et d'un terminal mobile tenu par le conducteur du véhicule automobile, et
- la figure 2 représente schématiquement des composants, utiles à la compréhension de l'invention, du véhicule automobile et du terminal mobile de la figure 1.

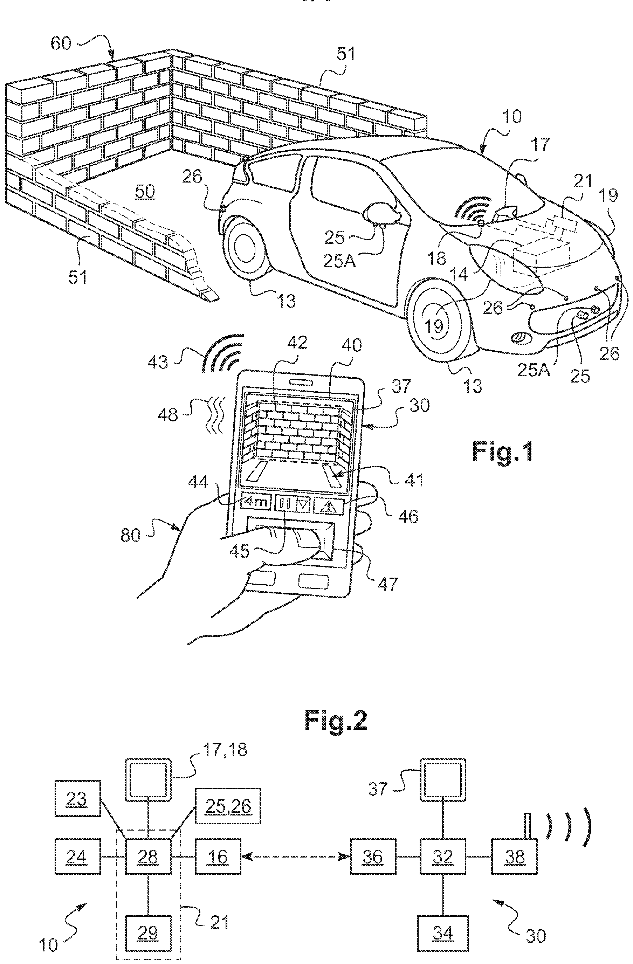

Sur la figure 1, on a représenté un véhicule automobile 10 situé sensiblement dans l'axe d'une place de stationnement 50, à l'avant de celle-ci.

Comme cela apparaît sur la figure 1, le véhicule automobile 10 est une voiture comportant quatre roues 13, dont deux roues avant directrices.

En variante, il pourrait s'agir d'un véhicule automobile comprenant trois roues, ou davantage de roues.

Classiquement, ce véhicule automobile 10 comporte un châssis qui supporte notamment un groupe motopropulseur 14 (à savoir un moteur et des moyens de transmission du couple du moteur aux roues motrices), un système de direction pour faire varier l'angle d'orientation des deux roues avant directrices, des éléments de carrosserie et des éléments d'habitacle.

Telle qu'elle apparaît sur cette figure 1, la place de stationnement 50 est délimitée par deux murs latéraux 51 entre lesquels le conducteur souhaite garer le véhicule automobile 10.

On notera à ce stade que la distance entre ces deux murs latéraux 51 est ici suffisante pour garer le véhicule automobile 10 sur la place de stationnement 50, mais qu'elle n'est pas suffisante pour permettre au conducteur du véhicule d'ouvrir l'une des portières afin d'entrer ou de sortir de son véhicule.

Un obstacle 60, ici formé par un troisième mur en pierres, est situé au fond de la place de stationnement 50.

Sur la figure 1, on observe également la main d'un utilisateur (ici le conducteur du véhicule automobile 10) tenant un terminal mobile 30.

Ce terminal mobile 30 est ici un téléphone portable intelligent (ou « smartphone »).

En variante, il pourrait s'agir d'un autre type de terminal mobile, par exemple d'une télécommande dédiée au contrôle du stationnement du véhicule automobile 10 ou d'une télécommande dédiée aux pilotages de différentes fonctions du véhicule automobile (verrouillage et déverrouillage des portières, démarrage du moteur, contrôle du stationnement du véhicule automobile 10, ...). Il pourrait aussi s'agir d'une montre connectée, d'une paire de lunettes connectée, ou d'une tablette informatique.

L'invention porte ici sur un procédé permettant au conducteur du véhicule automobile 10 de surveiller, depuis l'extérieur du véhicule, que le véhicule automobile 10 se gare automatiquement et sans problème dans la place de stationnement 50, grâce à ce terminal mobile 30.

Dans le contexte de la présente invention, le véhicule automobile 10 comprend une unité électronique de commande (ou ECU pour "Electronic Control Unit"), appelée ici calculateur 21, qui peut entrer en communication via une liaison sans fil avec le terminal mobile 30 afin d'échanger des données avec ce terminal mobile 30.

Ici, la liaison sans fil utilisée pour communiquer entre le calculateur 21 et le terminal mobile 30 est par exemple de type Bluetooth.

La figure 2 représente schématiquement des composants, utiles à la compréhension de l'invention, du véhicule automobile 10 et du terminal mobile 30.

Sur cette figure 2, on observe que le véhicule automobile 10 comprend, outre le calculateur 21 déjà mentionné, des moyens de commande 23 du système de direction, des moyens de contrôle 24 du groupe motopropulseur 14, au moins un moyen d'aide à la détection d'obstacles 25, 26, des moyens d'interaction 17, 18 situés dans l'habitacle du véhicule automobile 10, et un module de communication sans fil 16.

Les moyens de commande 23 permettent de faire varier l'orientation des roues 13 directrices, sans intervention du conducteur sur le volant du véhicule automobile.

Les moyens de contrôle 24 du groupe motopropulseur 14 sont adaptés à contrôler notamment le régime du moteur et le rapport de vitesses engagé, sans intervention du conducteur.

Il est ici prévu plusieurs moyens d'aide à la détection d'obstacles 25, 26.

Ainsi, comme le montre la figure 1, le véhicule automobile est équipé de capteurs 26 (du type ultrasons, radar, sonar ou lidar), dont des capteurs avant situés à l'avant du véhicule automobile pour déterminer les distances entre ces capteurs et l'obstacle le plus proche de l'avant du véhicule, et dont des capteurs arrière situés à l'arrière du véhicule automobile pour déterminer les distances entre ces capteurs et l'obstacle le plus proche de l'arrière du véhicule. Ces différents capteurs 26 sont prévus pour communiquer au calculateur 21 les distances précitées.

Le véhicule automobile est également équipé de caméras 25, ici au nombre de quatre, qui sont respectivement situées à l'avant du véhicule automobile 10 pour acquérir une image de la zone située à l'avant du véhicule, à l'arrière du véhicule automobile pour acquérir une image de la zone située à l'arrière du véhicule, et sur chaque côté du véhicule (ici dans les rétroviseurs extérieurs) pour acquérir des images des zones situées de chaque côté du véhicule. Ces caméras 25 sont prévues pour communiquer au calculateur 21 les images précitées, en flux continu.

Des sources de lumière 25A, distinctes des phares 19 du véhicule, sont ici prévues à côté de chaque caméra 25 pour permettre d'illuminer la zone filmée par chaque caméra 25.

Les moyens d'interaction 17, 18, qui sont situés dans l'habitacle du véhicule automobile 10 pour permettre au conducteur d'interagir avec le calculateur 21, comportent quant à eux ici un écran 17 et au moins un émetteur sonore 18. Ils pourraient comporter d'autres éléments (par exemple un vibreur dans le siège ou dans le volant du véhicule).

L'écran 17 est ici un écran tactile, qui permet au conducteur de voir s'afficher des informations et de saisir des données. En variante, il pourrait s'agir d'un écran associé à un clavier.

L'émetteur sonore 18 est ici formé par l'ensemble des enceintes équipant le véhicule. En variante, il pourrait s'agir d'un émetteur sonore équipant l'écran 17.

L'écran 17 et l'émetteur sonore 18 sont pilotés par le calculateur 21.

Le calculateur 21 comprend à cet effet un processeur 28 et une unité de mémorisation 29 (voir figure 2), par exemple une mémoire non-volatile réinscriptible ou un disque dur.

L'unité de mémorisation 29 mémorise notamment des données utilisées dans le cadre du procédé décrit ci-dessous, notamment une clé virtuelle VK, un numéro d'identification VID attribué au véhicule automobile 10 et/ou un numéro de série N attribué au calculateur 21.

L'unité de mémorisation 29 mémorise également une application informatique, constituée de programmes d'ordinateur comprenant des instructions dont l'exécution par le processeur 28 permet la mise en œuvre par le calculateur 21 du procédé décrit ci-après. La version de cette application est aussi mémorisée dans l'unité de mémorisation 29.

Le calculateur 21 est notamment adapté à élaborer, en fonction des données (images et distances) reçues des caméras 25 et des capteurs 26, des informations à afficher sur l'écran 17 ou à émettre via l'émetteur sonore 18, lorsque cela s'avère utile, notamment en cas d'obstacle détecté lorsque le conducteur stationne son véhicule sur une place de stationnement 50.

Le calculateur 21 est également adapté à piloter les moyens de commande 23 pour contrôler la direction du véhicule, et les moyens de contrôle 24 pour contrôler la vitesse du véhicule, sans intervention du conducteur, afin de garer automatiquement le véhicule automobile (grâce aux seules données reçues des caméras 25 et des capteurs 26).

Le calculateur 21 est aussi adapté à commander automatiquement l'allumage et l'extinction des sources de lumière 25A et des phares 19, lorsque cela s'avère utile.

Comme le montre la figure 2, le terminal mobile 30 comprend quant à lui un processeur 32, une mémoire 34 (par exemple une mémoire non-volatile réinscriptible), un module de communication sans fil 36, un module 38 de communication sur le réseau de téléphonie mobile, et une interface utilisateur (ici un écran tactile 37, mais il pourrait s'agir d'un écran couplé à un clavier).

La mémoire 34 permet notamment au terminal mobile 30 de mémoriser une application utilisateur, destinée à faciliter la commande des fonctionnalités du véhicule automobile 10 au moyen de ce terminal mobile 30. La version de cette application est mémorisée dans la mémoire 34.

La mémoire 34 est également adaptée à mémoriser une clé virtuelle VK, qui permettra au calculateur 21 du véhicule automobile 10 d'authentifier le terminal mobile 30 afin de lui laisser accès aux fonctionnalités du véhicule automobile 10 s'il y est autorisé.

Le module de communication sans fil 36 du terminal mobile 30 permet d'établir une liaison sans fil (ici de type Bluetooth comme déjà indiqué) avec le module de communication sans fil 16 du véhicule automobile 10, à travers laquelle le processeur 28 du calculateur 21 et le processeur 32 du terminal mobile 30 peuvent échanger des données, notamment comme exposé plus loin.

L'objet du présent exposé porte alors plus précisément sur un procédé de contrôle interactif (au moyen du terminal mobile 30) du véhicule automobile 10 lorsque ce véhicule se gare automatiquement dans une place de stationnement 50.

On considérera ici le cas où le conducteur, après avoir arrêté son véhicule automobile 10 à proximité de la place de stationnement 50, sort du véhicule et souhaite que le véhicule automobile 10 se gare automatiquement sur cette place de stationnement 50, sans intervention humaine directe sur l'orientation des roues directrices.

Dans ce cas, le conducteur devra toutefois veillé à ce que le véhicule automobile 10 se gare à l'endroit souhaité, sans danger et sans heurt. C'est pour faciliter ces opérations de surveillance que le procédé suivant sera mis en œuvre.

Le procédé débute lorsque le conducteur sélectionne un mode de stationnement automatique du véhicule automobile 10. Il peut sélectionner ce mode soit sur l'écran 17 prévu dans le véhicule automobile (auquel cas il dispose d'un laps de temps suffisant pour sortir du véhicule), soit sur l'écran tactile 37 du terminal mobile 30.

Alors commence l'étape de stationnement automatique du véhicule automobile 10.

Au cours de cette étape, le calculateur 21 pilote lesdits moyens de commande 23 et de contrôle 24 en fonction des informations reçues des caméras 25 et des capteurs 26, informations qui sont à cet effet traitées pour permettre au calculateur 21 de déterminer la position de la place de stationnement 50 (entre les murs latéraux 51) et la position d'éventuels obstacles 60.

Cette opération de pilotage des moyens de commande 23 et de contrôle 24 étant connue de l'homme du métier et ne faisant pas en propre l'objet de la présente invention, elle ne sera pas ici décrite plus en détail.

Au cours également de cette étape, le calculateur 21 peut afficher des images sur l'écran 17 et émettre des sons via l'émetteur sonore 18, de manière à informer le conducteur (s'il se trouvait dans l'habitacle) de la présence et de la proximité d'obstacles 60.

Cette opération d'affichage d'images et d'émission de sons étant aussi connue de l'homme du métier et ne faisant pas en propre l'objet de la présente invention, elle ne sera pas ici décrite plus en détail.

Selon une caractéristique particulièrement avantageuse de l'invention, au cours de l'étape de stationnement automatique du véhicule, le calculateur 21 transmet au terminal mobile 30 au moins les images acquises par l'une des caméras 25 et/ou un paramètre de distance mesuré grâce à l'un des capteurs 26, de telle manière que le conducteur puisse percevoir la présence éventuelle d'un obstacle 60, à l'aide du terminal mobile 30.

Autrement formulé, la présente invention propose de fournir au conducteur 80 (grâce au terminal mobile 30) une partie au moins des informations facilitant le stationnement du véhicule dont il disposerait (grâce à l'écran 17 ou à l'émetteur sonore 18) s'il était dans l'habitacle du véhicule automobile 10.

Préférentiellement, on fournit au conducteur 80, grâce au terminal mobile 30, l'ensemble de ces informations facilitant le stationnement du véhicule.

De cette manière, lorsque le conducteur est à l'extérieur du véhicule, il dispose d'un faisceau d'informations l'aidant à surveiller que le véhicule se gare sans danger sur la place de stationnement 50.

On peut maintenant décrire dans le détail la manière selon laquelle le procédé s'opère.

Classiquement, le calculateur 21 vérifie à intervalles réguliers si un terminal mobile entre dans le champ de réception de son module de communication sans fil 36.

Ainsi, lorsque le terminal mobile 30 du conducteur entre dans ce champ de réception, une liaison Bluetooth s'établit entre ces deux appareils.

De ce fait, lorsque le conducteur démarre l'application utilisateur stockée dans la mémoire 34 de son terminal mobile 30 et qu'il sélectionne le mode de stationnement automatique du véhicule automobile 10, cette instruction est susceptible d'être communiquée au calculateur 21 du véhicule automobile 10.

Toutefois, avant de communiquer cette instruction au calculateur 21, il est nécessaire que le terminal mobile 30 et le calculateur 21 s'identifient et s'authentifient mutuellement.

Alors, une étape de mise en réseau du terminal mobile 30 avec le calculateur 21 du véhicule automobile 10 est prévue, pour assurer la communication entre ces deux appareils.

Pour cela, le terminal mobile 30 affiche tout d'abord sur son écran 37 des questions permettant d'identifier le véhicule automobile que le conducteur souhaite voir manœuvrer (cette opération est notamment nécessaire lorsque le conducteur se trouve dans un garage dans lequel sont garés plusieurs véhicule lui appartenant).

Ainsi, le terminal mobile peut-il être programmé pour demander la marque, le modèle ou encore la couleur du véhicule que le conducteur souhaite voir manœuvrer. Cette question peut par exemple être proposée sous la forme d'un menu dans lequel sont listés des véhicules enregistrés comme appartenant au conducteur.

Une fois le véhicule automobile 10 identifié, une authentification est nécessaire pour assurer au véhicule automobile que le terminal mobile 30 est autorisé à piloter le véhicule automobile 10.

Cette opération d'authentification étant connue de l'homme du métier, elle ne sera pas ici décrite en détail. On expliquera seulement qu'elle peut consister, pour le calculateur 21, à envoyer un message (ou « défi ») au terminal mobile 30, à crypter ce message grâce à sa clé virtuelle VK, à attendre que le terminal mobile 30 renvoie ce message sous forme crypté (on rappelle que la mémoire du terminal mobile 30 stocke également la clé virtuelle VK) et à comparer ces deux messages cryptés afin de vérifier qu'ils sont identiques.

Des informations caractérisant le véhicule automobile 10 et le terminal mobile 30 peuvent également être échangées pour faciliter leurs identifications. Il peut par exemple s'agir du numéro d'identification VID attribué au véhicule automobile 10 et/ou du numéro de série N attribué au calculateur 21, et du numéro IMEI du terminal mobile 30 (dans le cas envisagé où ce terminal mobile est un téléphone portable).

Au cours de cette étape de mise en réseau, le terminal mobile 30 et le calculateur 21 peuvent aussi échanger d'autres données de mise en réseau, parmi lesquelles :
- une langue de communication pour l'utilisateur 80,
- une information fournissant la version de l'application stockée dans le calculateur 21 du véhicule automobile 10,
- une information fournissant la version de l'application utilisateur stockée dans le terminal mobile 30,
- un statut de priorité de l'application utilisateur stockée dans le terminal mobile 30.

La langue de communication permet au calculateur 21 de s'enquérir de la langue que souhaite utiliser le conducteur 80, par exemple le français, l'anglais ou l'allemand.

Pour cela, on peut prévoir que le calculateur 21 commande l'affichage sur l'écran 37 du terminal mobile 30 d'un message demandant au conducteur de saisir cette information.

En variante, on peut prévoir que le calculateur 21 demande cette information au terminal mobile 30, qui la connaît déjà puisque le conducteur a programmé le terminal mobile pour qu'il communique dans une langue particulière.

Les informations fournissant les versions des applications stockées dans le calculateur 21 et dans le terminal mobile 30 permettent à ces deux appareils de vérifier s'ils sont adaptés à communiquer ensemble. Si tel n'est pas le cas, l'opération de stationnement du véhicule est interrompue jusqu'à ce que l'une au moins de ces applications soit mise à jour.

Enfin, le statut de priorité de l'application utilisateur permet au terminal mobile 30 et au calculateur de connaître le caractère prioritaire de cette application utilisateur sur d'autres applications stockées dans la mémoire 34 du terminal mobile 30. Ainsi, en associant à l'application utilisateur un statut moins prioritaire que l'application de téléphonie stockée dans la mémoire 34 du terminal mobile 30, on s'assure que l'opération de stationnement du véhicule sera automatiquement suspendue dès lors qu'un appel téléphonique arrivera sur le terminal mobile 30.

Lorsque l'ensemble de ces données de mise en réseau ont été échangées entre le terminal mobile 30 et le calculateur 21 du véhicule automobile 10, l'instruction de démarrer le stationnement automatique du véhicule est fournie au calculateur 21.

Une étape préliminaire peut alors éventuellement être mise en œuvre. Cette étape consiste à vérifier si le terminal mobile 30 est à l'intérieur ou à l'extérieur du véhicule automobile 10.

On comprend que si le terminal mobile 30 est à l'intérieur du véhicule (ce qui signifie que le conducteur est à son poste de conduite), les informations facilitant la surveillance du stationnement du véhicule n'auront pas nécessairement à être transmises au terminal mobile 30 (elles seraient en effet redondantes avec celles déjà affichées sur l'écran 17 du véhicule).

On considérera ici le cas contraire, où le conducteur et son terminal mobile 30 sont détectés comme étant à l'extérieur du véhicule. Dans ce cas, on pourra prévoir que les informations facilitant la surveillance du stationnement du véhicule ne soient pas transmises à l'écran 17 et à l'émetteur sonore 18, mais seulement au terminal mobile 30.

Le terminal mobile 30 affiche alors sur son écran 37 un message invitant le conducteur à choisir le type de manœuvre qu'il souhaite que son véhicule opère pour se garer sur la place de stationnement 50.

Ainsi, le conducteur peut choisir par exemple et de manière non limitative que son véhicule se gare en épi, en bataille et marche avant, en bataille et marche arrière, en créneau.

Le conducteur peut également sélectionner un mode exploration, dans le cas où aucun marquage au sol n'est prévu. Dans ce cas, le véhicule se garera en fonction uniquement de la position des obstacles identifiés.

Le conducteur peut aussi sélectionner un mode automatique, dans le cas où des marquages au sol sont prévus. Dans ce cas, le véhicule se garera en fonction de la position des marquages au sol identifiés et des obstacles détectés.

Cette instruction, une fois validée, est ensuite transmise au calculateur 21 du véhicule automobile, de manière qu'il puisse calculer la trajectoire que le véhicule doit emprunter pour se garer sur la place de stationnement 50.

Avant le démarrage du véhicule automobile 10, l'application utilisateur stockée dans le terminal mobile 30 commande l'affichage sur l'écran 37 de différentes informations, dont une partie permet au conducteur de surveiller l'opération de stationnement du véhicule automobile 10 et dont l'autre partie permet au conducteur d'interagir avec le véhicule automobile 10.

Sur la figure 1, on a ainsi représenté un exemple de mode d'affichage de ces informations sur l'écran 37. Bien entendu, d'autres modes d'affichage pourraient être envisagés.

Ainsi, dans l'exemple représenté, l'écran 37 affiche, sur une moitié supérieure, une image acquise par l'une au moins des caméras 25 équipant le véhicule automobile 10. Il peut s'agir d'une image brute ou d'une image traitée ou d'une image reconstituée.

Ainsi peut-il s'agir de l'image brute, acquise en temps réel par l'une des quatre caméras 25. Dans la suite de cet exposé, on parlera de vue avant ou arrière ou latérale.

Il pourrait également s'agir d'une image traitée, afin de réduire par exemple les problèmes de luminosité, de distorsion ou d'angle de vue posés par les caméras.

Il pourrait enfin s'agir d'une image reconstituée, élaborée en fonction des images acquises par plusieurs des caméras 25 équipant le véhicule automobile 10. Il pourrait ainsi notamment s'agir d'une vue de dessus reconstituant l'environnement du véhicule. Dans la suite de cet exposé, on parlera de vue d'oiseau (en anglais, « bird view »).

Dans l'exemple représenté sur la figure 1, il s'agit de la vue arrière 40.

L'écran 37 affiche par ailleurs, en superposition de cette image, un motif 41 illustrant la trajectoire du véhicule automobile 10.

Il pourrait s'agir d'un motif statique, formé de deux bandes rectilignes illustrant la trajectoire qu'emprunterait le véhicule si ses roues directrices étaient maintenues droites.

Préférentiellement, il s'agira d'un motif 41 dynamique formée de deux bandes courbées illustrant la trajectoire qu'empruntera le véhicule automobile 10, compte tenu de l'orientation des roues directrices du véhicule.

L'écran 37 affiche par ailleurs, en superposition de cette image, des motifs 42 signalant les obstacles 60 détectés. Comme cela apparaît sur la figure 1, il s'agit ici d'un rectangle en traits pointillés, qui clignote à l'écran et qui permet au conducteur de vérifier que le véhicule a bien détecté l'obstacle 60. La détection de cet obstacle pourra avoir été réalisée grâce aux seules caméras 25, ou grâce également aux capteurs 26.

La position de cet obstacle 60 pourra également être signalée par le haut-parleur du terminal mobile 30, grâce à une alerte sonore 43 (par exemple par des « bips » de plus en plus rapprochés lorsque la distance séparant le véhicule de l'obstacle diminue). On pourrait également prévoir que le terminal mobile 30 émette des vibrations 48 de plus en plus rapprochées lorsque la distance séparant le véhicule de l'obstacle 60 diminue.

Cet obstacle 60 pourra aussi être signalé par un message d'alerte visuelle 46 sur l'écran. Ici, ce message d'alerte est formé par un panneau clignotant 46 représenté sous la vue arrière 40.

Cet obstacle 60 pourra enfin être signalé par la valeur de la distance séparant le véhicule de l'obstacle 60 (mesurée grâce aux capteurs 26). Cette valeur sera ici présentée sous la forme d'un message 44 situé sous la vue arrière 40.

La zone inférieure de l'écran 37 du terminal mobile 30 permettra par ailleurs au conducteur 80 d'interagir avec le véhicule automobile 10.

Elle permettra ainsi d'acquérir au moins une instruction de contrôle émise par le conducteur 80, de telle sorte que cette instruction de contrôle soit transmise au calculateur 21 du véhicule automobile 10 et que le stationnement automatique du véhicule se fasse en fonction de cette instruction de contrôle.

Ainsi, corne le montre la figure 1, une zone de l'écran 37 affiche un menu déroulant 45 permettant au conducteur 80, alors que le véhicule a débuté sa manœuvre de stationnement, de changer le type de manœuvre que le véhicule doit exécuter (épi, créneau, ...).

Par ailleurs, une zone d'appui 47 de l'écran 37 permettra au conducteur de transmettre une instruction d'interrompre la manœuvre de stationnement, ou une instruction de poursuivre la manœuvre de stationnement, ou une donnée relative à sa capacité à poursuivre la manœuvre de stationnement.

Ici, cette zone d'appui est délimitée par un rectangle affiché dans la partie inférieure de l'écran 37. Les diagonales de ce rectangle sont également affichées.

Pour que le stationnement débute, il convient que le conducteur appuie sur la zone d'appui 47, de sorte que le terminal mobile 30 fournisse au calculateur 21 du véhicule automobile une instruction de poursuivre la manœuvre de stationnement.

Tant que cet appui est maintenu, le calculateur 21 considère que le véhicule automobile 10 peut poursuivre sa manœuvre de stationnement.

En revanche, dès lors que cet appui est relâché, le terminal mobile 30 fournit au calculateur 21 du véhicule automobile une instruction d'interrompre la manœuvre de stationnement, de manière que le véhicule s'arrête.

Lorsque cet appui est relâché, on peut prévoir que le terminal mobile 30 commande l'affichage sur son écran 37 des menus complémentaires, permettant par exemple au conducteur de forcer l'allumage ou l'extinction des sources de lumière 25A ou des phares, pour mieux voir les obstacles.

Ici, on peut en outre prévoir que la vue affichée sur le haut de l'écran 37 change en fonction de la position du doigt du conducteur dans la zone d'appui 47. Ainsi, lorsque le conducteur appui sur le centre de la zone d'appui 47, l'écran 37 affiche la vue d'oiseau. Lorsque le conducteur appui sur la partie supérieure (respectivement inférieure ou latérale) de la zone d'appui 47, l'écran 37 affiche au contraire la vue avant (respectivement la vue arrière ou la vue de côté correspondante). De cette manière, le conducteur peut facilement passer d'une vue à l'autre.

Dans le cas ou la vue d'oiseau est sélectionnée, on pourra prévoir qu'elle s'affiche sur la totalité de l'écran 37, en superposition des autres informations affichées. On pourra sinon prévoir que ces autres s'informations s'affichent sur l'un des bords de l'écran.

On peut enfin prévoir que lorsque le doigt du conducteur 80 reste en appuie sur l'écran 37 mais sort de la zone d'appui 47, ce qui est interprété comme étant un signe que le conducteur est distrait, le terminal mobile 30 fournit au calculateur 21 du véhicule automobile une instruction d'interrompre la manœuvre ou au moins de la ralentir. La position du doigt par rapport à la zone d'appui 47 constitue donc une donnée relative à la capacité de l'utilisateur 80 à poursuivre la manœuvre de stationnement.

On peut également prévoir que dans ce cas, le terminal mobile 30 émette un son et/ou une vibration pour alerter le conducteur.

Une fois le véhicule automobile 10 stationné dans la place de stationnement 50, le calculateur 21 commande l'affichage sur l'écran 37 du terminal mobile 30 d'un message de fin d'opération.

Alors, le véhicule automobile 10 se trouve garé sur la place de stationnement 50. On note ainsi que le conducteur a pu garer le véhicule automobile sur une place de stationnement qu'il n'aurait pas pu utiliser, sauf à rester coincé dans son véhicule à cause de la proximité des murs latéraux 51 qui l'auraient empêché d'ouvrir les portières du véhicule.

La présente invention n'est nullement limitée au mode de réalisation décrit et représenté.

On pourrait ainsi prévoir que la zone d'appui ne soit pas confondue avec la zone dans laquelle le conducteur doit appuyer pour changer de vue. On pourrait ainsi prévoir que le changement de vue soit opéré en appuyant sur un bouton du terminal mobile 30, distinct de l'écran 37.

Dans cette variante, on pourrait prévoir que la zone d'appui soit formée par l'ensemble de l'écran 37.

On pourrait alors demander au conducteur de bouger constamment son doigt sur l'écran 37, de manière à contrôler qu'il est bien attentif à la manœuvre.

Selon une autre variante de réalisation de l'invention, on pourrait prévoir que le terminal mobile 30 affiche sur son écran un menu permettant au conducteur de forcer le véhicule automobile à engager un rapport de vitesses différent de celui engagé, de manière que le véhicule se gare autrement que selon la trajectoire calculée. Ainsi, le conducteur pourra par exemple forcer le véhicule à ressortir partiellement de la place de stationnement, s'il estime que la trajectoire empruntée par le véhicule ne garantit pas le niveau de sécurité souhaité.

## Revendications

1. Procédé de contrôle interactif du stationnement automatique d'un véhicule automobile (10) dans une place de stationnement (50) au moyen d'un terminal mobile (30), ledit véhicule automobile (10) étant équipé :
- de moyens de commande (23) de l'orientation des roues (13) du véhicule automobile (10),
- de moyens de contrôle (24) d'un groupe motopropulseur (14) du véhicule automobile (10),
- d'au moins un moyen d'aide à la détection d'obstacles (25, 26),
- de moyens d'interaction (17, 18) situés dans un habitacle du véhicule automobile (10), et
- d'un calculateur (21) qui est adapté à piloter lesdits moyens de commande (23) et de contrôle (24), et qui est adapté à transmettre, en fonction de données reçues du moyen d'aide à la détection d'obstacles (25, 26), une information auxdits moyens d'interaction (17, 18) afin d'informer un utilisateur (80) installé dans le véhicule automobile (10) de la présence éventuelle d'un obstacle (60),
dans lequel il est prévu des étapes de :
- sélection par l'utilisateur d'un mode de stationnement automatique du véhicule automobile (10), et de
- stationnement automatique du véhicule automobile (10) au cours de laquelle le calculateur (21) pilote lesdits moyens de commande (23) et de contrôle (24) en fonction de l'information reçue du moyen d'aide à la détection d'obstacles (25, 26),
au cours de l'étape de stationnement automatique, ladite information est transmise par le calculateur (21) au terminal mobile (30) afin de signaler la présence éventuelle d'un obstacle (60) à un utilisateur situé à l'extérieur du véhicule automobile (10),
**caractérisé en ce que** préalablement à ladite étape de stationnement automatique, il est prévu une étape de mise en réseau du terminal mobile (30) avec le calculateur (21) du véhicule automobile (10) au cours de laquelle le terminal mobile (30) et le calculateur (21) échangent au moins une donnée de mise en réseau comprise dans la liste suivante :
- une information fournissant la version d'une application stockée dans le calculateur (21) du véhicule automobile (10),
- une information fournissant la version d'une application stockée dans le terminal mobile (30), ou
- un statut de priorité de l'application stockée dans le terminal mobile (30).

2. Procédé de contrôle interactif selon la revendication 1, dans lequel lors de l'étape de mise en réseau du terminal mobile (30) avec le calculateur (21) du véhicule automobile (10), le terminal mobile (30) et le calculateur (21) échangent au moins une donnée de mise en réseau comprise dans la liste suivante :
- une langue de communication pour l'utilisateur (80) ;
- une information (VID) caractérisant le véhicule automobile (10) ;
- une information (IMEI) caractérisant le terminal mobile (30).

3. Procédé de contrôle interactif selon la revendication précédente, dans lequel, ledit terminal mobile (30) comportant un écran d'affichage (37), ledit véhicule automobile (10) comportant plusieurs moyens d'aide à la détection d'obstacles (25, 26) adaptés chacun à transmettre des données différentes au calculateur (21), au cours de l'étape de stationnement automatique, le calculateur (21) élabore plusieurs informations en fonction desdites données, et l'utilisateur sélectionne à l'aide du terminal mobile (30), parmi lesdites informations élaborées, au moins une information à afficher sur ledit écran d'affichage (37).

4. Procédé de contrôle interactif selon l'une des revendications précédentes, dans lequel ladite information est comprise dans la liste suivante :
- une image (40) acquise par une caméra (25) équipant le véhicule automobile (10),
- une image reconstituée, élaborée en fonction de plusieurs images acquises par plusieurs caméras (25) équipant le véhicule automobile (10),
- un motif (41) illustrant la trajectoire du véhicule automobile (10), à superposer à ladite image (40) acquise ou à ladite image reconstituée,
- un motif (42) signalant un obstacle (60), à superposer à ladite image (40) acquise ou à ladite image reconstituée,
- une alerte sonore (43) signalant un obstacle (60),
- une alerte visuelle (46) signalant un obstacle (60),
- une vibration (48) signalant un obstacle (60),
- une distance (44) avant percussion d'un obstacle (60), ou
- un indicateur (45) relatif à un ensemble de manœuvres que le véhicule automobile (10) est en mesure d'exécuter.

5. Procédé de contrôle interactif selon l'une des revendications précédentes, dans lequel, ledit terminal mobile (30) comportant un écran d'affichage (37), ledit véhicule automobile (10) comportant au moins deux caméras (25), au cours de ladite étape de stationnement automatique, le terminal mobile (30) met à disposition de l'utilisateur (finforma) un moyen lui permettant de choisir l'affichage sur l'écran d'affichage (37) des images (40) acquises soit par l'une, soit par l'autre des caméras (25).

6. Procédé de contrôle interactif selon l'une des revendications précédentes, dans lequel, le terminal mobile (30) comportant des moyens d'acquisition d'au moins une instruction de contrôle du véhicule automobile (10) émise par l'utilisateur (80) et des moyens de transmission de cette instruction de contrôle au calculateur (21) du véhicule automobile (10), au cours de ladite étape de stationnement automatique, le calculateur (21) pilote lesdits moyens de commande (23) et de contrôle (24) en fonction de chaque instruction de contrôle reçue du terminal mobile (30).

7. Procédé de contrôle interactif selon la revendication précédente, dans lequel ladite instruction de contrôle est comprise dans la liste suivante :
- une instruction d'allumage ou d'extinction de moyens d'éclairage (19, 25A) du véhicule automobile (10),
- un type de manœuvre à exécuter,
- un rapport de vitesses à engager,
- une instruction d'interrompre la manœuvre de stationnement,
- une instruction de poursuivre la manœuvre de stationnement, ou
- une donnée relative à la capacité de l'utilisateur (80) à poursuivre la manœuvre de stationnement.

## Patentansprüche

1. Verfahren zur interaktiven Steuerung des automatischen Einparkens eines Kraftfahrzeugs (10) auf einem Stellplatz (50) mittels eines mobilen Endgeräts (30) wobei das Kraftfahrzeug (10) mit Folgendem ausgerüstet ist:
- Mitteln zur Regelung (23) der Ausrichtung der Räder (13) des Kraftfahrzeugs (10),
- Mittel zur Steuerung (24) eines Antriebsstrangs (14) des Kraftfahrzeugs (10),
- mindestens einem Hilfsmittel zur Erkennung von Hindernissen (25, 26),
- Interaktionsmittel (17, 18), die sich in einer Fahrgastzelle des Kraftfahrzeugs (10) befinden, und
- einem Rechner (21), der geeignet ist, die Regelungs-(23) und Steuerungsmittel (24) zu steuern, und der geeignet ist, in Abhängigkeit von den Daten, die vom Hilfsmittel zur Erkennung von Hindernissen (25, 26) empfangen werden, eine Information an die Interaktionsmittel (17, 18) zu übertragen, um einen Benutzer (80), der im Kraftfahrzeug (10) sitzt, über das eventuelle Vorhandensein eines Hindernisses (60) zu informieren,
wobei folgende Schritte vorgesehen sind:
- Auswählen, durch den Benutzer, eines automatischen Einparkmodus des Kraftfahrzeugs (10), und
- automatisches Einparken des Kraftfahrzeugs (10), während dessen der Rechner (21) die Regelungs- (23) und Steuerungsmittel (24) in Abhängigkeit von der Information steuert, die vom Hilfsmittel zur Erkennung von Hindernissen (25, 26) empfangen wird,
im Verlauf des Schritts des automatischen Einparkens die Information vom Rechner (21) an das mobile Endgerät (30) übertragen wird, um einem Benutzer, der sich außerhalb des Kraftfahrzeugs (10) befindet, das eventuelle Vorhandensein eines Hindernisses (60) zu melden, **dadurch gekennzeichnet, dass** vor dem Schritt des automatischen Einparkens ein Schritt des Vernetzens des mobilen Endgeräts (30) mit dem Rechner (21) des Kraftfahrzeugs (10) vorgesehen ist, in dessen Verlauf das mobile Endgerät (30) und der Rechner (21) mindestens ein Datenelement zur Vernetzung austauschen, das in der folgenden Liste enthalten ist:
- eine Information, die die Version einer Anwendung angibt, die im Rechner (21) des Kraftfahrzeugs (10) gespeichert ist,
- eine Information, die die Version einer Anwendung angibt, die im mobilen Endgerät (30) gespeichert ist, oder
- einen Prioritätsstatus der Anwendung, die im mobilen Endgerät (30) gespeichert ist.

2. Verfahren zur interaktiven Steuerung nach Anspruch 1, wobei beim Schritt des Vernetzens des mobilen Endgeräts (30) mit dem Rechner (21) des Kraftfahrzeugs (10) das mobile Endgerät (30) und der Rechner (21) mindestens ein Datenelement zur Vernetzung austauschen, das in der folgenden Liste enthalten ist:
- eine Kommunikationssprache für den Benutzer (80);
- eine Information (VID), die das Kraftfahrzeug (10) kennzeichnet;
- eine Information (IMEI), die das mobile Endgerät (30) kennzeichnet.

3. Verfahren zur interaktiven Steuerung nach dem vorhergehenden Anspruch, wobei, das mobile Endgerät (30) aufweisend einen Anzeigebildschirm (37), das Kraftfahrzeug (10) aufweisend mehrere Hilfsmittel zur Erkennung von Hindernissen (25, 26), die jeweils geeignet sind, verschiedene Daten an den Rechner (21) zu übertragen, im Verlauf des Schritts des automatischen Einparkens der Rechner (21) in Abhängigkeit von den Daten mehrere Informationen erstellt und der Benutzer mithilfe des mobilen Endgeräts (30) aus den erstellten Informationen mindestens eine Information auswählt, die auf dem Anzeigebildschirm (37) anzuzeigen ist.

4. Verfahren zur interaktiven Steuerung nach einem der vorhergehenden Ansprüche, wobei die Information in der folgenden Liste enthalten ist:
- ein Bild (40), das von einer Kamera (25) erfasst ist, mit der das Kraftfahrzeug (10) ausgerüstet ist,
- ein rekonstruiertes Bild, das in Abhängigkeit von mehreren Bildern erstellt ist, die von mehreren Kameras (25) erfasst sind, mit denen das Kraftfahrzeug (10) ausgerüstet ist,
- ein Motiv (41), das die Bahn des Kraftfahrzeugs (10) darstellt, zum Überlagern des erfassten Bilds (40) oder des rekonstruierten Bilds,
- ein Motiv (42), das ein Hindernis (60) anzeigt, zum Überlagern des erfassten Bilds (40) oder des rekonstruierten Bilds,
- eine akustische Warnung (43), die ein Hindernis (60) meldet,
- eine visuelle Warnung (46), die ein Hindernis (60) meldet,
- eine Vibration (48), die ein Hindernis (60) meldet,
- einen Abstand (44) vor dem Zusammenstoß mit einem Hindernis (60), oder
- eine Anzeige (45) bezogen auf eine Menge von Manövern, die das Kraftfahrzeug (10) ausführen kann.

5. Verfahren zur interaktiven Steuerung nach einem der vorhergehenden Ansprüche, wobei, das mobile Endgerät (30) aufweisend einen Anzeigebildschirm (37), das Kraftfahrzeug (10) aufweisend mindestens zwei Kameras (25), im Verlauf des Schritts des automatischen Einparkens das mobile Endgerät (30) dem Benutzer (finforma) ein Mittel zur Verfügung stellt, das es ihm gestattet, die Anzeige der erfassten Bilder (40) auf dem Anzeigebildschirm (37) entweder durch die eine oder durch die andere der Kameras (25) zu wählen.

6. Verfahren zur interaktiven Steuerung nach einem der vorhergehenden Ansprüche, wobei, das mobile Endgerät (30) aufweisend Mittel zur Erfassung mindestens einer Anweisung zur Steuerung des Kraftfahrzeugs (10), die vom Benutzer (80) erteilt wird, und Mittel zur Übertragung dieser Steuerungsanweisung an den Rechner (21) des Kraftfahrzeugs (10), im Verlauf des Schritts des automatischen Einparkens der Rechner (21) die Regelungs-(23) und Steuerungsmittel (24) in Abhängigkeit von jeder Steuerungsanweisung steuert, die vom mobilen Endgerät (30) empfangen wird.

7. Verfahren zur interaktiven Steuerung nach dem vorhergehenden Anspruch, wobei die Steuerungsanweisung in der folgenden Liste enthalten ist:
- eine Anweisung zum Ein- oder Ausschalten von Beleuchtungsmitteln (19, 25A) des Kraftfahrzeugs (10),
- eine Art eines auszuführenden Manövers,
- einen einzulegenden Gang,
- eine Anweisung, das Einparkmanöver zu unterbrechen,
- eine Anweisung, das Einparkmanöver fortzusetzen, oder
- ein Datenelement bezogen auf die Fähigkeit des Benutzers (80), das Einparkmanöver fortzusetzen.

## Claims

1. Method for interactive control of the automatic parking of a motor vehicle (10) in a parking space (50) by means of a mobile terminal (30), said motor vehicle (10) being provided with:
- command means (23) for controlling the orientation of the wheels (13) of the motor vehicle (10),
- control means (24) for controlling a power train (14) of the motor vehicle (10),
- at least one obstacle detection assistance means (25, 26),
- interaction means (17, 18) located in a passenger compartment of the motor vehicle (10), and
- a computer (21) which is suited to controlling said command means (23) and control means (24), and which is suited to transmitting, according to data received from the obstacle detection assistance means (25, 26), a piece of information to said interaction means (17, 18) in order to inform a user (80) seated in the motor vehicle (10) of the possible presence of an obstacle (60),
in which the following steps are provided:
- selection by the user of an automatic parking mode for parking the motor vehicle (10), and
- automatic parking of the motor vehicle (10) in the course of which the computer (21) controls said command means (23) and control means (24) according to the piece of information received from the obstacle detection assistance means (25, 26),
in the course of the automatic parking step, said information is transmitted by the computer (21) to the mobile terminal (30) in order to indicate the possible presence of an obstacle (60) to a user located outside the motor vehicle (10),
**characterized in that**, prior to said automatic parking step, a step of networking the mobile terminal (30) with the computer (21) of the motor vehicle (10) is provided, in the course of which the mobile terminal (30) and the computer (21) exchange at least one item of networking data included in the following list:
- a piece of information supplying the version of an application stored in the computer (21) of the motor vehicle (10),
- a piece of information supplying the version of an application stored in the mobile terminal (30), or
- a priority status of the application stored in the mobile terminal (30).

2. Method for interactive control according to Claim 1, in which, in the step of networking the mobile terminal (30) with the computer (21) of the motor vehicle (10), the mobile terminal (30) and the computer (21) exchange at least one item of networking data included in the following list:
- a communication language for the user (80),
- a piece of information (VID) characterizing the motor vehicle (10),
- a piece of information (IMEI) characterizing the mobile terminal (30).

3. Method for interactive control according to the preceding claim, in which, said mobile terminal (30) comprising a display screen (37), said motor vehicle (10) comprising a plurality of obstacle detection assistance means (25, 26) each suited to transmitting different data to the computer (21), in the course of the automatic parking step, the computer (21) prepares a plurality of pieces of information according to said data, and the user selects with the assistance of the mobile terminal (30), from among said prepared pieces of information, at least one piece of information to be displayed on said display screen (37).

4. Method for interactive control according to one of the preceding claims, in which said information is included in the following list:
- an image (40) acquired by a camera (25) provided on the motor vehicle (10),
- a recreated image, prepared according to a plurality of images acquired by a plurality of cameras (25) provided on the motor vehicle (10),
- a pattern (41) illustrating the trajectory of the motor vehicle (10), to be superimposed on said acquired image (40) or on said recreated image,
- a pattern (42) indicating an obstacle (60), to be superimposed on said acquired image (40) or on said recreated image,
- a sound warning (43) indicating an obstacle (60),
- a visual warning (46) indicating an obstacle (60),
- a vibration (48) indicating an obstacle (60),
- a distance (44) before hitting an obstacle (60), or
- an indicator (45) relating to a set of manoeuvres that the motor vehicle (10) is able to execute.

5. Method for interactive control according to one of the preceding claims, in which, said mobile terminal (30) comprising a display screen (37), said motor vehicle (10) comprising at least two cameras (25), in the course of said automatic parking step, the mobile terminal (30) places at the disposal of the user (finforma) a means enabling them to choose the display on the display screen (37) of the images (40) acquired by either the one or the other of the cameras (25).

6. Method for interactive control according to one of the preceding claims, in which, the mobile terminal (30) comprising acquisition means for acquiring at least one control instruction for controlling the motor vehicle (10) issued by the user (80) and transmission means for transmitting this control instruction to the computer (21) of the motor vehicle (10), in the course of said automatic parking step, the computer (21) controls said command means (23) and control means (24) according to each control instruction received from the mobile terminal (30).

7. Method for interactive control according to the preceding claim, in which said control instruction is included in the following list:
- an instruction for turning the lighting means (19, 25A) of the motor vehicle (10) on or off,
- a type of manoeuvre to be executed,
- a gear ratio to be engaged,
- an instruction to interrupt the parking manoeuvre,
- an instruction to continue the parking manoeuvre, or
- an item of data relating to ability of the user (80) to continue the parking manoeuvre.
